Europäisches Patentamt

European Patent Office

Office européen des brevets

(11) Veröffentlichungsnummer: **0 468 147 A2**

# EUROPÄISCHE PATENTANMELDUNG

(21) Anmeldenummer: **91107081.1**

(22) Anmeldetag: **02.05.91**

(51) Int. Cl.5: **F04D 29/26**, F16D 1/08

(30) Priorität: **25.07.90 DE 4023574**

(43) Veröffentlichungstag der Anmeldung:
**29.01.92 Patentblatt 92/05**

(84) Benannte Vertragsstaaten:
**CH DE FR GB IT LI SE**

(71) Anmelder: **Standard Elektrik Lorenz Aktiengesellschaft**
**Lorenzstrasse 10**
**W-7000 Stuttgart 40(DE)**

(72) Erfinder: **Glasauer, Rudolf**
**Oberndorfer Strasse 28**
**W-8300 Landshut(DE)**

(74) Vertreter: **Pohl, Herbert, Dipl.-Ing et al**
**Standard Elektrik Lorenz AG Patent- und**
**Lizenzwesen Postfach 30 09 29**
**W-7000 Stuttgart 30(DE)**

(54) **Gebläse.**

(57) Die Anmeldung (1) befaßt sich mit der Befestigung eines Lüfterrades auf einer Antriebswelle (3), ohne daß es einer mechanischen Bearbeitung der Antriebswelle (3) bedarf. Das Lüfterrad (1) wird auf der unbearbeiteten zylindrischen Welle (3) festgeklemmt. Zu diesem Zweck ist die Nabe (2) des Lüfterrades (1) mit einer geschlitzten konischen Hülse (4) versehen, welche auf die Antriebswelle (3) aufgeschoben wird. Eine auf die Hülse (4) geschraubte Mutter (2) klemmt das Lüfterrad (1) auf der Antriebswelle (3) fest.

Fig. 1

Die Anmeldung betrifft ein Gebläse mit einem auf einer Antriebswelle befestigten Lüfterrad. Derartige Gebläse sind bekannt (Katalog: "Lüfter" Nr. 6650/3643 D 1.88 der Standard Elektrik Lorenz AG, 8300 Landshut).

Lüfterräder für kleine Axial- und Radialgebläse sind in der Regel mit Haben versehen, welche eine Querbohrung zur Aufnahme einer Befestigungsschraube aufweisen. Durch Eindrehen dieser Befestigungsschraube wird das Lüfterrad auf der Antriebswelle befestigt. Es sind aber auch Naben bekannt, welche mittels Preßsitz auf der Antriebswelle befestigt sind. Weiterhin ist die nabenlose Befestigung von Lüfterrädern auf einer Antriebswelle bekannt.

Für die nabenlose Befestigung der Lüfterräder ist eine verhältnismäßig aufwendige Gestaltung der Enden der Antriebswellen erforderlich, welche mit einem Gewinde, einem Einstich oder einem Ansatz für axiale Sicherungsscheiben versehen sein müssen. Mit Querbohrungen versehene Naben erfordern Anflachungen an den Enden der Antriebswellen.

Aufgepreßte und aufgeklebte Naben sind nur für die unlösbare Befestigung von Lüfterrädern geeignet. Die Befestigungsarten für die lösbare Befestigung der Lüfterräder, welche einen Werkstoffabtrag an dem Antriebswellenende notwendig machen, sind allenfalls bei Antriebswellen aus metallischen Werkstoffen anwendbar, weil diese Bearbeitung metallischer Werkstoffe verhältnismäßig kostengünstig durchzuführen ist. Das ist nicht mehr der Fall, wenn die Abtriebswellen aus einem spröden, mechanisch schwierig zu bearbeitenden Werkstoff, wie einem keramischen Werkstoff, besteht.

Das der Erfindung zugrunde liegende technische Problem besteht darin, eine lösbare Lüfterradbefestigung vorzuschlagen, welche gleichermaßen für Antriebswellen aus gut und schlecht mechanisch bearbeitbarem Werkstoff geeignet ist.

Dieses technische Problem ist erfindungsgemäß dadurch gelöst, daß das Lüfterrad mit einer Nabe versehen ist, welche auf der zylindrischen Antriebswelle festgeklemmt ist.

Diese Lüfterradbefestigung erfordert keine aufwendige mechanische Bearbeitung der Antriebswellenenden; sie ist leicht lösbar und für alle Werkstoffe der Antriebswellen geeignet.

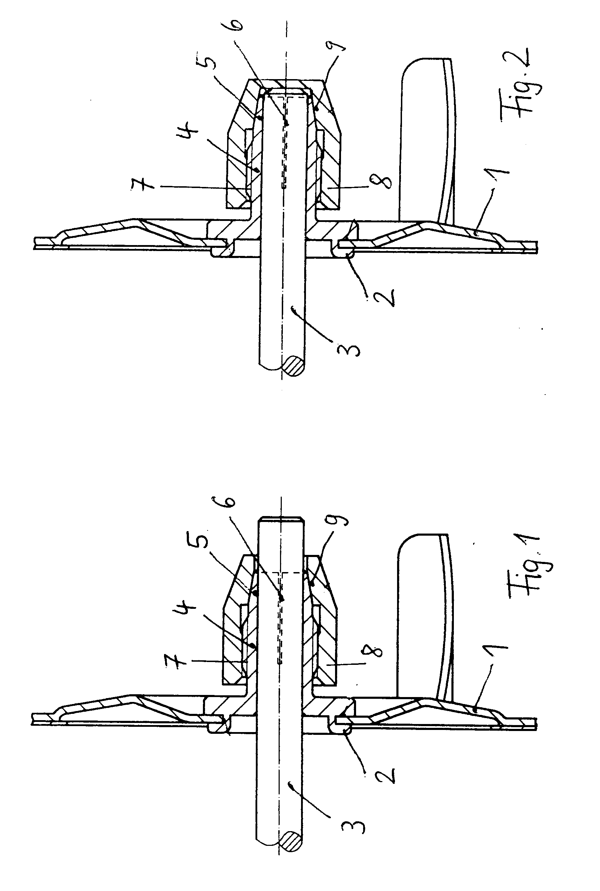

Vorteilhafte Ausgestaltungen der Erfindung sind in den Ansprüchen 2 bis 6 enthalten, welche nachfolgend anhand der Figuren 1 bis 6 erläutert ist. Die Figuren 1 bis 6 zeigen verschiedene Ausführungsformen der erfindungsgemäßen Lüfterradbefestigung.

Bei dem in Fig. 1 gezeigten Ausführungsbeispiel ist das Lüfterrad 1 mit der Nabe 2 verbunden. Das Lüfterrad 1 ist auf der Antriebswelle 3 lösbar befestigt. Zu diesem Zweck ist die Nabe 2 einstückig mit der zylindrischen Hülse 4 verbunden, welche das konische Ende 5 aufweist. Zylindrische Hülse 4 und konisches Ende 5 sind auf ihrem Umfang mit wenigstens einem Längsschlitz 6 versehen. Außerdem ist die zylindrische Hülse 4 auf ihrem Umfang mit einem Gewinde 7 versehen. Auf dieses Gewinde 7 ist die rohrförmige Mutter 8 aufgeschraubt, welche auf ihrer zylindrischen Innenfläche ebenfalls ein Innengewinde besitzt. Am Ende weist die Mutter 8 eine konische Verengung 9 auf.

Wenn die Mutter 8 auf die Hülse 4 aufgeschraubt wird, preßt die konische Verengung 9 die Hülse 4 mit ihrem konischen Ende 5 auf die Oberfläche der Antriebswelle 3, wodurch eine kraftschlüssige Verbindung zwischen Nabe 2 und Antriebswelle 3 erzielt wird. Bei dem in Fig. 1 gezeigten Ausführungsbeispiel sind beide Enden der Mutter 8 offen.

Das Ausführungsbeispiel gemäß Fig. 2 unterscheidet sich von dem Ausführungsbeispiel gemäß Fig. 1 nur dadurch, daß die Mutter 8 am rechten Ende 10 verschlossen ist. Deshalb sind alle anderen Teile mit den gleichen Bezugszeichen wie in Fig. 1 versehen.

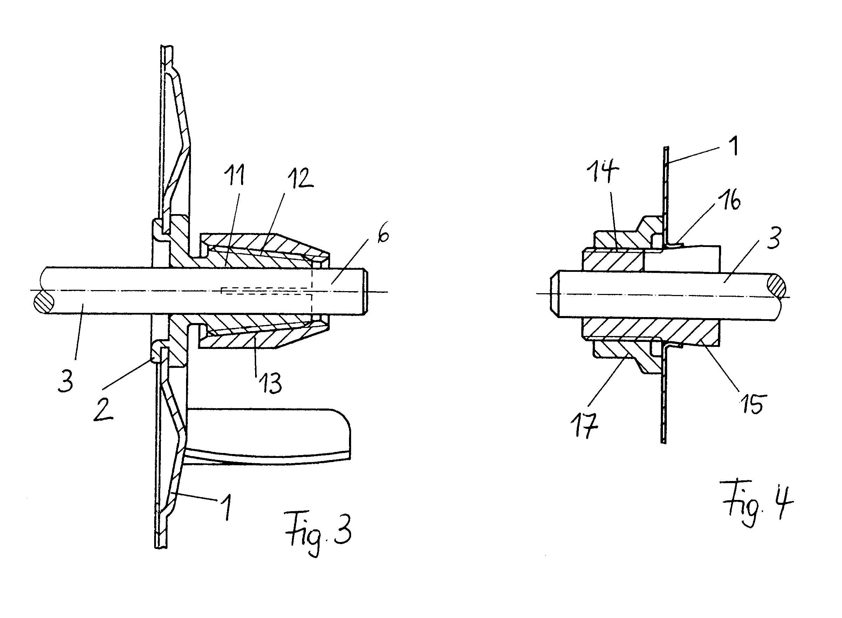

Das Ausführungsbeispiel gemäß Fig. 3 unterscheidet sich von den vorhergehenden Ausführungsbeispielen dadurch, daß sich die Hülse 11 mit dem auf ihrem Umfang angeordneten Gewinde 12 von links nach rechts konisch verjüngt. Die rohrförmige Mutter 13 mit dem auf ihrem Innenumfang angeordneten Gewinde ist innen ebenfalls in einer der Hülse 11 entsprechenden Weise konisch verjüngt ausgebildet. Die gegenüber den Figuren 1 und 2 unverändert gebliebenen Teile weisen die gleichen Bezugszeichen auf.

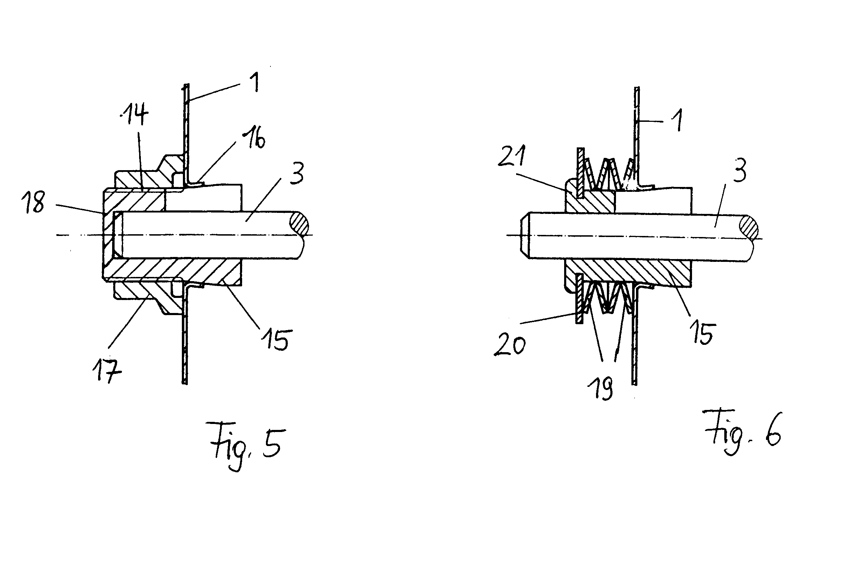

Bei dem Ausführungsbeispiel gemäß Fig. 4 ist auf die Antriebswelle 3 eine auf einem Teil ihrer Außenfläche mit einem Gewinde 14 versehene außen konische Hülse 15 aufgeschoben. Diese Hülse 15 ist in gleicher Weise wie die Hülsen 4 und 11 bei den Ausführungsbeispielen gemäß den Figuren 1 bis 3 mit wenigstens einem (nicht gezeigten) Längsschlitz versehen. Auf die Hülse 15 ist das mit einem Durchzug 16 versehene Lüfterrad 1 aufgeschoben. Danach ist die Mutter 17 auf die Hülse 15 aufgeschraubt, wodurch die Hülse 15 auf der Antriebswelle 3 und das Lüfterrad 1 auf der Hülse festgeklemmt wird.

Das Ausführungsbeispiel gemäß Fig. 5 unterscheidet sich von dem Ausführungsbeispiel gemäß Fig. 4 dadurch, daß das linke Ende 18 der Hülse 15 verschlossen ausgebildet ist.

Bei dem Ausführungsbeispiel gemäß Fig. 6 ist die Mutter 17 der Ausführungsbeispiele in den Figuren 4 und 5 durch die Tellerfedern 19 und den Sperring 20 ersetzt. Der Sperring 20 stützt sich an der Verdickung 21 der Hülse 15 ab. Der Sperring 20 kann lösbar oder fest angeordnet sein.

**Patentansprüche**

1. Gebläse mit einem auf einer Antriebswelle befestigten Lüfterrad, **dadurch gekennzeichnet,** daß das Lüfterrad mit einer Nabe (2) versehen ist, welche auf der zylindrischen Antriebswelle (3) festgeklemmt ist.

2. Gebläse nach Anspruch 1, dadurch gekennzeichnet, daß die Nabe (2) als eine auf ihrem Umfang mit einem Gewinde (7) und am freien Ende mit einem Konus (5) versehene zylindrische Hülse (4) ausgebildet ist, welche am Umfang wenigstens einen Längsschlitz (6) aufweist und auf welche eine rohrförmige Mutter (8) aufschraubbar ist.

3. Gebläse nach Anspruch 1, dadurch gekennzeichnet, daß die Nabe (2) als eine auf ihrem Umfang mit einem Gewinge (12) versehene, außen konische Hülse (11) ausgebildet ist, welche am Umfang wenigstens einen Längsschlitz (6) aufweist und auf welche eine rohrförmige, innen konische Mutter (13) aufschraubbar ist.

4. Gebläse nach Anspruch 1, dadurch gekennzeichnet, daß die Nabe (2) als eine auf ihrem Umfang glatte konische Hülse (15) ausgebildet ist, welche am Umfang wenigstens einen Längsschlitz (6) aufweist und deren Innendurchmesser mittels außen auf die Hülse (15) aufgeschobener und axial vorgespannter Tellerfedern (19) verringerbar ist.

5. Gebläse nach den Ansprüchen 1 bis 4, dadurch gekennzeichnet, daß die Mutter (8, 13, 17) an beiden Stirnseiten offen ist.

6. Gebläse nach den Ansprüchen 1 und 2, dadurch gekennzeichnet, daß die Mutter (8) an einer Stirnseite geschlossen ist.

Fig. 1

Fig. 2

EP 0 468 147 A2

Fig. 3

Fig. 4

Fig. 5

Fig. 6

EP 0 468 147 A2